Europäisches Patentamt

European Patent Office

Office européen des brevets

(19)

(11) Numéro de publication: **0 263 763 B1**

(12) **FASCICULE DE BREVET EUROPEEN**

(45) Date de publication du fascicule du brevet:
18.07.90

(21) Numéro de dépôt: 87402247.8

(22) Date de dépôt: 08.10.87

(51) Int. Cl.⁵: **B23B 5/16**, B29C 53/80,
B26D 3/16

(54) Machine pour la préparation automatique des extrémités à raccorder des tuyaux souples en caoutchouc armé.

(30) Priorité: 10.10.86 FR 8614155

(43) Date de publication de la demande:
13.04.88 Bulletin 88/15

(45) Mention de la délivrance du brevet:
18.07.90 Bulletin 90/29

(84) Etats contractants désignés:
BE CH DE ES GB GR IT LI LU SE

(56) Documents cités:
FR-A- 2 086 014
US-A- 4 430 913

(73) Titulaire: CHARBONNAGES DE FRANCE, Etablissement
public dit:, Tour Albert 1er 65 avenue de Colmar,
F-92507 Rueil Malmaison Cédex(FR)

(72) Inventeur: Klein, René, 68 Rue Poincaré, F-57540 Petite
Rosselle(FR)
Inventeur: Huff, Denis, 17 rue de la Paix Carling,
F-57490 L'Hôpital(FR)

(74) Mandataire: Chevallier, Robert Marie Georges et al,
Cabinet BOETTCHER 23, rue La Boétie,
F-75008 Paris(FR)

## Description

L'invention a pour objet une machine conçue pour exécuter de manière automatique la préparation des extrémités de tuyaux souples en caoutchouc armé. Les tuyaux souples de ce genre assurent le raccordement entre des réseaux fixes d'arrivée ou de retour d'un fluide sous pression et des installations ou des machines qui sont mues par ce fluide sous pression.

Comme machines qui nécessitent des tuyaux souples de ce genre, on peut citer, par exemple, dans les mines, les engins de soutènement et d'abattage qui comprennent de nombreux vérins hydrauliques à haute pression.

Dans les industries comme l'extraction minière, les tuyaux souples en caoutchouc armé sont utilisés en grande quantité et leur usure est rapide en raison des conditions de travail. En conséquence, leur remplacement est fréquent et nécessite une préparation préalable. Cette préparation consiste à dérouler un tuyau souple armé qui est fourni à l'état enroulé sur un touret ou sur un dévidoir, à couper la longueur nécessaire, à dénuder les extrémités pour permettre l'execution facile par la suite du raccordement de ce tuyau souple à des raccords appropriés.

Jusqu'à présent, ces opérations de coupe à la longueur et de dénudage des extrémités coupées sont effectuées manuellement ; ce sont des opérations difficiles et coûteuses à cause de l'épaisseur et de la résistance des tuyaux. Ces derniers ont une paroi en caoutchouc à résistance élevée au frottement au milieu de laquelle est noyée une tresse métallique qui élève la résistance du tuyau à la pression du fluide hydraulique. Le dénudage consiste à éliminer presque totalement la couche de caoutchouc qui couvre la tresse métallique pour que l'on puisse, ultérieurement, emmancher une busette et une douille, puis sertir la douille sur la zone dénudée. Le flexible ainsi équipé permet l'assemblage avec un raccord.

Une machine automatique pour couper à la longueur désirée un tuyau souple en caoutchouc armé et pour dénuder les extrémités coupées afin de permettre leur équipement comprend, conformément à l'invention :
- un bâti ayant une face principale,
- un premier bloc et un second bloc ayant chacun un axe géométrique longitudinal montés sur ladite face principale du bâti et ayant chacun des moyens de déplacement en sens longitudinal d'un tuyau souple armé et des moyens de maintien de ce même tuyau, ce premier bloc et ce second bloc étant montés déplaçables par rapport au bâti, entre d'une part une position de déplacement du tuyau souple où lesdits moyens de déplacement et de maintien des deux blocs ont leurs axes géométriques en alignement et définissent ensemble un axe général de déplacement d'un tuyau souple armé, les moyens de maintien qui font partie respectivement des deux blocs étant tournés l'un vers l'autre et séparés par un intervalle déterminé et, d'autre part, une position de dénudage à laquelle les deux blocs sont disposés en oblique respectivement sur un côté dudit axe général et sur le côté opposé de ce même axe général,
- un moyen de tronçonnage ayant une lame de coupe avec cette lame de coupe située dans un plan perpendiculaire audit axe général substantiellement équidistant des deux moyens de maintien quand le premier bloc et le second bloc occupent leur position de déplacement,
- une première et une seconde unité de dénudage ayant chacune une première extrémité équipée d'un outil de dénudage agissant coaxialement à un axe de dénudage, ces unités étant montées sur le bâti respectivement sur le côté et sur le côté opposé susmentionnés dudit axe général, chaque axe géométrique de dénudage étant en prolongement de l'axe géométrique des moyens d'entraînement et de maintien du bloc correspondant quand celui-ci occupe sa position de dénudage,
- des organes moteurs tels que des vérins disposés d'une part pour provoquer un mouvement de rapprochement relatif des blocs et du moyen de tronçonnage afin de tronçonner un tuyau serré dans les moyens de maintien, d'autre part, pour déplacer les blocs entre leur position de déplacement et leur position de dénudage.

De préférence, le moyen de tronçonnage est fixe en position sur le bâti et les blocs sont montés déplaçables par rapport à ce moyen de tronçonnage entre leur position de déplacement et une position de tronçonnage à laquelle un tuyau souple serré dans les moyens de maintien est coupé par la lame de coupe.

Selon un mode de réalisation de l'invention, les blocs sont montés chacun sur la face principale du bâti avec une possibilité de déplacement dans un premier plan perpendiculaire à ladite face principale pour être déplacés de leur position de déplacement à leur position de tronçonnage, et une possibilité de déplacement dans un second plan parallèle à la face principale du bâti pour être déplacés de leur position de déplacement à leur position de dénudage.

Pour des raisons de simplification de la construction, dans un mode de réalisation préféré de l'invention, un organe porteur est interposé entre le bâti et chacun des deux blocs; chaque organe porteur est monté sur la face principale du bâti avec une possibilité de pivotement autour d'un arbre perpendiculaire à ladite face principale. De plus, chaque organe porteur est muni d'un arbre parallèle à cette même face principale autour duquel est monté pivotant le bloc correspondant.

De préférence, le second bloc est équipé, en aval des moyens de déplacement, d'un moyen de marquage servant à apposer une marque d'identification sur chaque tronçon de tuyau souple coupé et dénudé aux extrémités.

Pour bien faire comprendre l'invention, on donnera maintenant une description d'un mode préféré de réalisation. On se reportera aux dessins annexés dans lesquels :

- la figure 1 est une vue générale en élévation et en coupe, par un plan longitudinal, d'une machine conforme à l'invention, représentée juste avant l'exécution d'une opération de tronçonnage d'un tuyau,

- la figure 2 est une vue de dessus de la même machine, représentée juste avant l'exécution d'une opération de dénudage,

- la figure 3 est une vue partielle schématique montrant la fin de l'exécution de l'opération de tronçonnage,

- la figure 4 est une vue en élévation à plus grande échelle du bloc situé en amont,

- la figure 5 est une vue en coupe selon V-V de la fig. 4,

- la figure 6 montre une variante de montage des blocs.

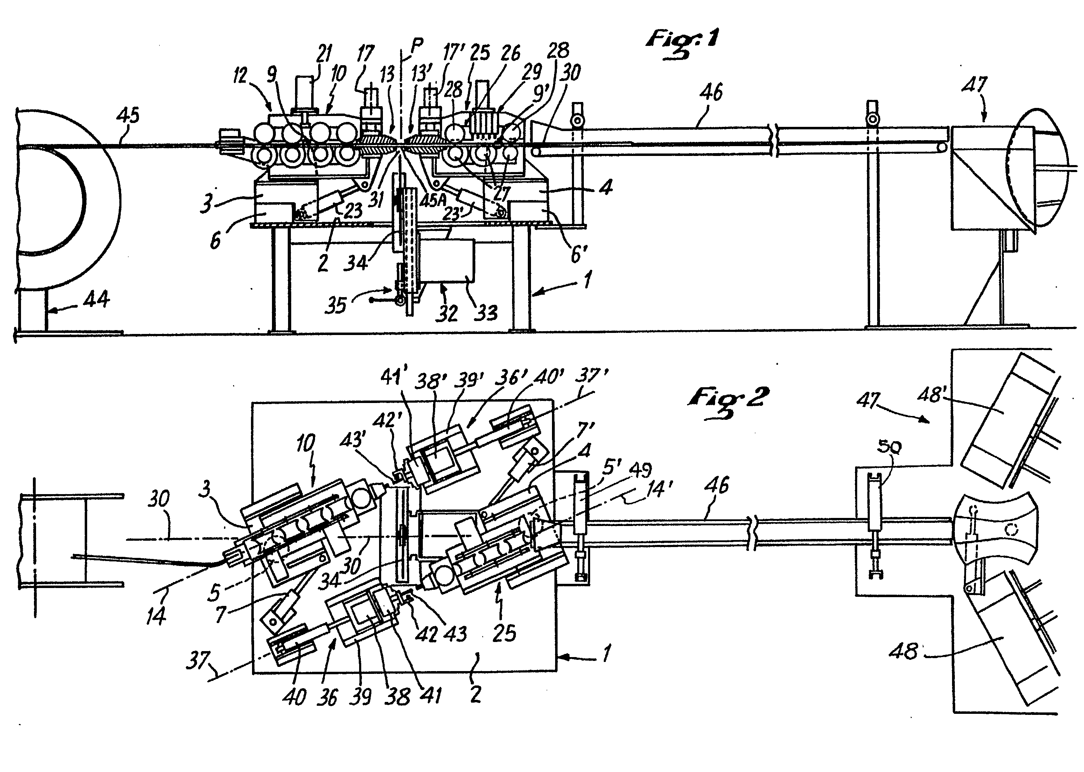

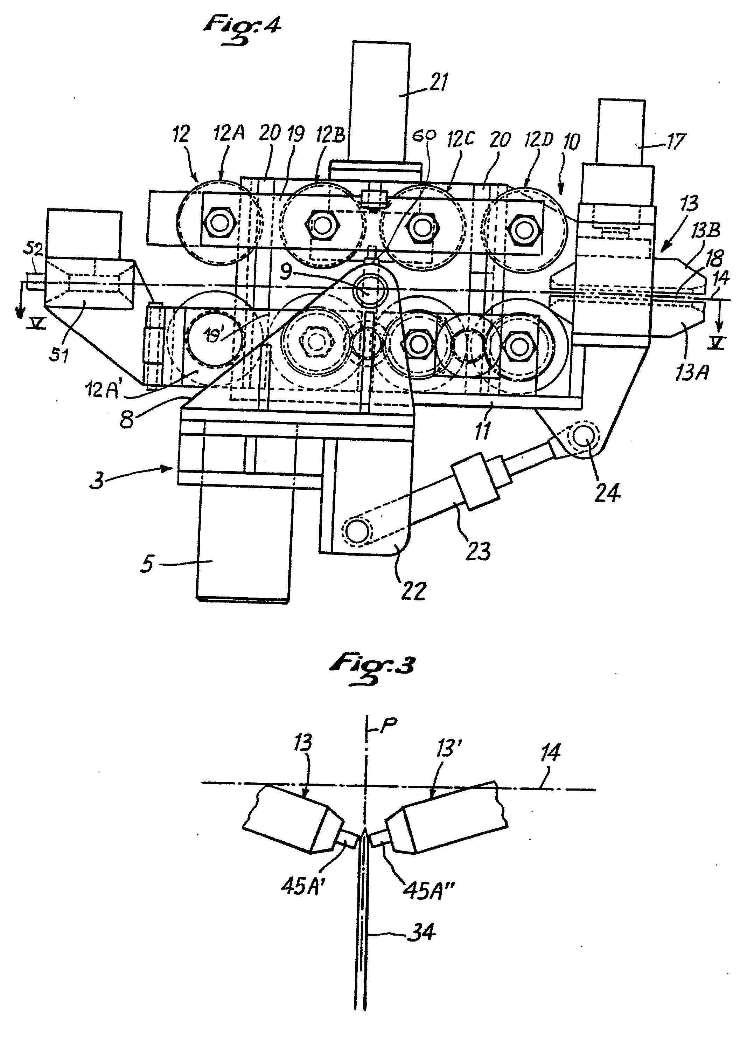

La machine représentée et décrite ici comme exemple de réalisation comprend un bâti 1 qui a une face principale 2, généralement horizontale, sur laquelle sont montés deux organes porteurs 3,4 espacés l'un de l'autre de part et d'autre d'un plan transversal de symétrie indiqué par un trait mixte P. Les deux organes porteurs 3,4 sont tournés l'un vers l'autre. La figure 4 montre à plus grande échelle l'organe porteur 3. Ce dernier est pourvu à son extrémité la plus éloignée du plan P d'un arbre 5 disposé perpendiculairement à la face principale 2 et contenu dans un palier 6 qui fait partie du bâti 1. Un vérin 7 visible sur la figure 2 est articulé d'une part sur le bâti 1, d'autre part sur l'organe porteur 3, sur un côté de cet organe porteur 3. Le même montage existe pour l'organe porteur 4. Sur les figures 1 et 2, le palier et le vérin associé à ce dernier sont indiqués respectivement par les références 6' et 7'; toutefois, le vérin 7' est situé sur le côté de l'organe porteur 4 opposé au côté où est monté le vérin 7 par rapport à l'organe porteur 3.

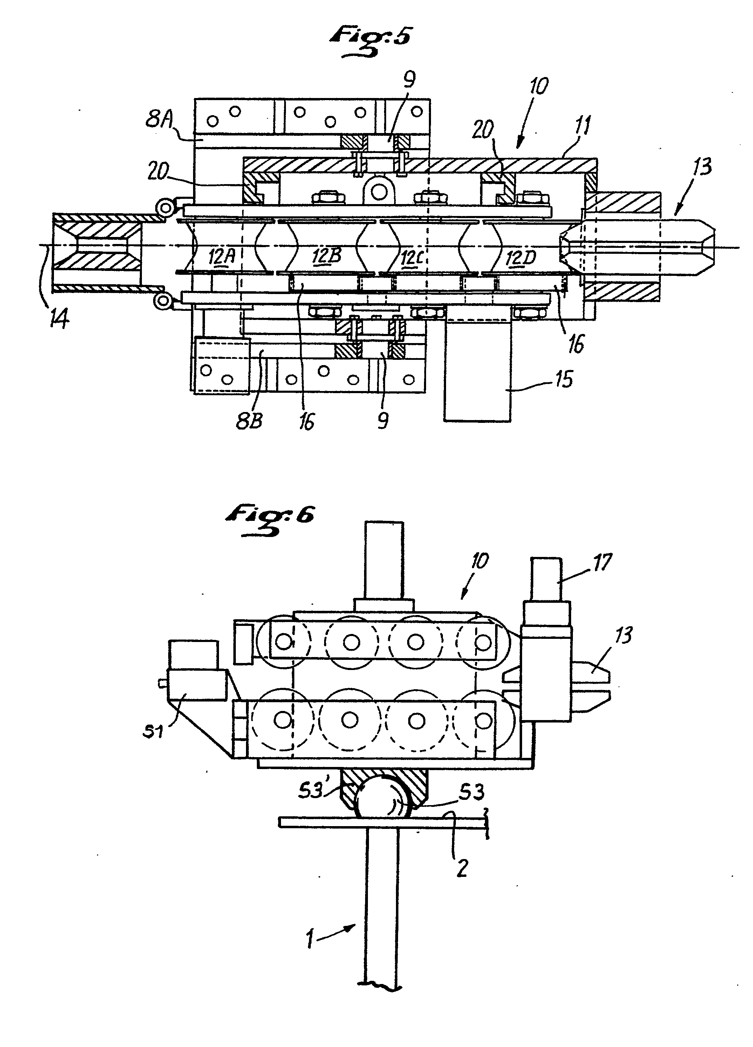

Les figures 4 et 5 montrent plus clairement que l'organe porteur 3 a la configuration d'une chape 8 à deux ailes parallèles 8A, 8B qui supportent chacune un tronçon d'un arbre de pivotement 9. Ce dernier sert à porter avec une possibilité de pivotement un premier bloc 10 de moyens de déplacement et de maintien pour tuyau souple en caoutchouc armé. De tels moyens sont connus en soi dans le domaine de la fabrication des tubes, des tuyaux, des câbles, etc...

Dans le présent exemple, le premier bloc 10 comprend une cage rigide 11, portée par les deux tronçons de l'arbre 9, et qui porte elle-même les moyens de déplacement désignés par la référence générale 12 et les moyens de maintien désignés par la référence générale 13.

Les moyens de déplacement 12 sont constitués essentiellement par un jeu de quatre paires successives de galets 12A, 12B, 12C, 12D disposés deux à deux de part et d'autre d'un axe géométrique 14. Les galets 12B, 12C et 12D situés en dessous de l'axe géométrique 14 sont entraînés en rotation à partir d'un moteur hydraulique 15 à l'aide de roues dentées 16. Le galet 12A' inférieur est fou et est relié à un codeur d'impulsions faisant ainsi office de galet compteur. L'axe géométrique 14 est parallèle aux ailes 8A, 8B; il est parallèle aussi à la face principale 2 du bâti 1 sauf dans une position particulière du bloc 10 que l'on décrira plus loin.

A son extrémité qui est la plus éloignée de l'arbre 5, le jeu des paires de galets 12A à 12D est suivi des moyens de maintien désignés par la référence générale 13 et composés essentiellement d'une demi-coquille inférieure fixe de serrage 13A et d'une demi-coquille supérieure mobile de serrage 13B. Cette dernière est déplaçable par rapport à la coquille fixe 13A sous l'effet d'un vérin 17. Ces deux demi-coquilles 13A, 13B limitent entre elles un volume 18 qui est concentrique à l'axe géométrique 14. Les demi-coquilles 13A, 13B sont remplaçables facilement en correspondance avec la grosseur des tuyaux souples à traiter; les galets inférieurs 12B, 12C et 12D sont des galets moteurs réglables en position par rapport à l'axe géométrique 14 suivant le diamètre des tuyaux à traiter. A cette fin, ces galets inférieurs sont portés par un coulisseau 19' guidé par des glissières 20 qui font partie de la cage 11. Le réglage se fait par l'intermédiaire d'un système vis écrou 60. Les galets supérieurs sont des galets mobiles de serrage, ils sont portés par un coulisseau 19 guidé par des glissières 20. Au coulisseau 19 est attelé un vérin 21. Quand un tuyau est contenu dans les paires de galets 12A à 12D, l'axe géométrique de ce tuyau est confondu avec l'axe géométrique 14.

Sur sa face inférieure, la chape 8 est pourvue d'un prolongement 22 sur lequel est articulée une extrémité d'un vérin 23 dont l'extrémité opposée est articulée, en 24, avec la partie extrême de la cage 11 en dessous des moyens de maintien 13. L'ensemble du bloc 10 peut donc pivoter autour de l'arbre 9 dans un plan perpendiculaire à la face principale 2 par un mouvement qui rapproche les moyens de maintien 13 de la face principale 2 du bâti 1 et qui donne à cet ensemble ainsi qu'à l'axe géométrique 14 une position en oblique.

Le premier bloc 10 décrit ci-dessus se trouve à gauche du plan P quand on regarde la figure 1. Un second bloc 25 est monté à droite du plan P; plus exactement ce second bloc 25 est monté sur l'organe porteur 4 au moyen d'un arbre 9' et il peut être incliné au moyen d'un vérin 23' installé symétriquement au vérin 23 par rapport au plan P.

Dans l'ensemble le second bloc 25 est le symétrique du premier bloc 10; il comprend des moyens de maintien 13' qui sont identiques mais disposés symétriquement aux moyens de maintien 13. Les moyens de déplacement désignés par la référence 26 sont différents des moyens de déplacement 12, en ce sens que le nombre des galets inférieurs moteurs 27 sont au nombre de trois seulement et les galets supérieurs de serrage 28 sont en nombre de deux seulement. La place libre au-dessus du galet inférieur 27 central qui n'a pas de galet supérieur antagoniste, est occupée par un moyen de marquage 29 de type connu en soi, par exemple à plusieurs crayons marqueurs. L'ensemble a un axe géométrique longitudinal 14'.

Quand les axes géométriques des deux blocs 10,25 sont en prolongement, ils constituent un axe général 30 de déplacement des tuyaux à traiter. Cet axe général 30 est horizontal et parallèle à la face principale 2 du bâti 1. Le long de cet axe, dans le sens de déplacement des tuyaux, on rencontre d'abord à gauche du plan P, les moyens d'entraînement 12 puis les moyens de maintien 13 du premier bloc 10 ensuite de l'autre côté du plan P les moyens de maintien 13' puis les moyens d'entraînement 26 du second bloc 25.

Les moyens de maintien 13 et 13' sont séparés par un intervalle déterminé 31 au milieu duquel passe le plan P et en dessous duquel est monté, sur le bâti 1, un moyen de tronçonnage désigné par la référence générale 32. Ce dernier est constitué essentiellement par un moteur 33 relié fonctionnellement à une lame de coupe 34. Celle-ci est un disque en acier à bord périphérique biseauté comme on peut le voir sur la figure 3. De préférence, le moyen de tronçonnage 32 est réuni au bâti 1 par l'intermédiaire d'un ensemble vis-écrou 35 qui permet d'en régler la position, c'est-à-dire la distance entre la lame de coupe 34 et l'axe général 30.

La face principale 2 de la table 1 supporte encore une première unité de dénudage 36 et une seconde unité de dénudage 36' qui sont identiques et disposées symétriquement par rapport au point de rencontre de l'axe général 30 avec le plan P, respectivement sur un côté et sur le côté opposé de l'axe général 30.

Chaque unité de dénudage 36, 36' a un axe géométrique de dénudage 37, 37' qui est en oblique par rapport à l'axe général 30; chaque unité comprend une tête de dénudage 38, 38' qui est plus proche de cet axe 30 que le reste de l'unité et qui est montée coulissante le long de l'axe géométrique 37, 37' au moyen de glissières 39, 39'. Un vérin 40, 40' articulé par une extrémité sur le bâti est attelé par son extrémité opposée à la tête de dénudage 38, 38' pour la déplacer en sens alternés, notamment pour l'exécution d'une course de dénudage. Chaque tête de dénudage 38, 38' comprend un mandrin 41, 41', entraîné en rotation par un moteur et équipé d'un outil rotatif de dénudage 42, 42'. Ce dernier est réglable en position, en sens radial et axial, par rapport à une broche de centrage 43, 43'. Cette dernière se trouve sur l'axe 37, 37' et elle est destinée à pénétrer à l'intérieur du tuyau à dénuder pendant l'exécution par l'outil 42, 42' de l'opération de dénudage sur la face latérale extérieure du tuyau.

La machine de l'invention comprend d'autres organes connus en soi, qu'il n'est pas nécessaire de décrire en détail.

Un touret de dévidage 44 est monté en amont de la machine pour alimenter celle-ci en tuyau souple en caoutchouc armé 45 qui doit être coupé en tronçons de longueurs déterminées et dénudés à ses extrémités opposées.

En aval de la machine est installé un tunnel de guidage à convoyeur interne 46 qui contient l'axe général 30 et qui dirige les tronçons de tuyau coupés et dénudés vers un poste de réception 47 où ils sont éjectés du tunnel. Ce dernier est déplaçable par rapport au convoyeur au moyen de vérins 49 et 50. Ce poste 47 est équipé de dispositifs d'enroulement 48, 48' pour enrouler les tronçons les plus longs, par exemple ceux qui ont plus de 4,50 m de long.

La machine de l'invention est équipée aussi de divers détecteurs comme un détecteur 51 à l'entrée du premier bloc 10 ou un détecteur 52 de position. Le détecteur 51 sert à détecter des défauts éventuels ou des jonctions en matière plastique existantes sur le tuyau enroulé et le détecteur 52 indique la présence de tuyau à l'entrée de la machine et assure ainsi le contrôle de l'approvisionnement.

Au premier bloc 10, le galet 12A' inférieur est relié fonctionnellement à un codeur-émetteur d'impulsions électriques, connu en soi, disponible dans le commerce, ce qui permet de mesurer automatiquement et avec précision la longueur des tronçons de tuyau à couper.

Le fonctionnement de la machine de l'invention est le suivant.

Initialement les deux blocs 10 et 25 occupent une position d'avancement visible sur la figure 1 à laquelle ils sont en alignement et leurs axes géométriques sont confondus avec l'axe général 30 de la machine. Un tuyau 45 est déroulé du touret d'alimentation 44; il est saisi dans les moyens d'avancement 12 qui ont été réglés pour le serrer convenablement et pour le faire progresser à travers la machine. Pendant son défilement, sa longueur est mesurée par le galet mesureur 12A'. Ce tuyau passe librement à travers les moyens de maintien 13 du premier bloc 10 et 13' du second bloc 25 puis il est saisi et entraîné aussi par les moyens d'entraînement 26 du second bloc 25. Quand la longueur désirée a été déroulée, les moyens d'entraînement 12 et 26 sont arrêtés en même temps que les moyens de maintien 13 et 13' sont serrés par les vérins 17 et 17'.

Les vérins 23 et 23' sont mis en action et ils déplacent chacun respectivement un des blocs 10,25 autour des arbres 9 et 9', dans un plan perpendiculaire à la face principale 2 du bâti 1, jusqu'à une position de tronçonnage où les moyens de maintien 13, 13' et de déplacement 12, 26 des deux blocs sont inclinés les uns vers les autres et vers la surface principale 2 du bâti 1. Pendant ce mouvement, la partie 45A du tuyau 45 qui s'étend dans l'intervalle 31 entre les moyens de maintien 13, 13', s'incurve sous l'effet des vérins 23 et 23' en direction de la lame de coupe 34 qui est en rotation et, à la fin du mouvement, cette partie 45A du tuyau est tronçonnée comme le montre la figure 3, ce qui fait apparaître deux parties extrêmes 45A' et 45A" qui doivent être dénudées. Les vérins 23, 23' sont mis en action en sens inverse; ils remettent les blocs 10 et 25 à leur position d'avancement puis ce sont les vérins 7 et 7' qui entrent en action pour faire pivoter le bloc 10 et le bloc 25 respectivement autour des arbres 5 et 5', dans un plan parallèle à la face principale 2 du bâti 1, jusqu'à une position de dénudage. Dans celle-ci le premier bloc 10 est disposé en oblique sur un côté de l'axe général 30 et le second bloc 25 est disposé en oblique sur l'autre côté de ce même axe général 30, comme le montre la figure 2.Dans cette position, l'axe géométrique 14 du premier bloc 10 est en alignement avec l'axe 37' de la seconde unité de dénudage 36' cependant que l'axe géométrique 14' du second bloc 25 est en alignement avec l'axe 37 de la première unité de dénudage 36. L'angle de pivotement minimum des unités de dénudage 36, 36' par rapport à l'axe général 30 est déterminé par construction en fonction de l'encombrement de ces unités de dénudage. Quand les deux blocs 10, 25 sont arrivés à leur position de dénudage, les parties extrêmes 45A', 45A" sont situées respectivement jusqu'en face des outils de dénudage 42, 42'. Ces derniers sont alors mis en rotation et poussés en sens axial par les vérins 40, 40', jusqu'à exécution du dénudage sur la longueur désirée. Quand cette opération est terminée, les vérins 7,7' remettent les blocs 10,25 à leur position d'avancement. A ce moment, le moyen de marquage 29 peut être mis en action si on le désire, puis les vérins 17, 17' desserrent les moyens de maintien 13, 13'. L'avancement du tuyau 45 à partir du touret 44, sous l'action des moyens d'avancement du bloc 10, reprend pour une nouvelle opération lorsque les moyens d'avancement du bloc 25 ont évacué vers le poste de réception 47 le tronçon de tuyau dont l'extrémité aval vient d'être d'être dénudée.

Diverses variantes peuvent être apportées à la machine de l'invention sans que l'on sorte pour autant de son cadre. Le sectionnement du tuyau par la lame de coupe 34 nécessite un déplacement relatif entre cette dernière et le tuyau, en sens transversal à celui-ci. Le moyen de tronçonnage 32 pourrait être monté mobile sur le bâti pour être déplacé transversalement au tuyau afin de le couper au milieu de la partie 45A tenue de manière rectiligne entre les moyens de maintien 13 et 13'. Cette solution n'est possible qu'avec un disque abrasif et conduit à une usure rapide avec surchauffe du disque et risque d'éclatement. Le déplacement par une inclinaison des blocs 10 et 25 vers la face principale 2 du bâti 1, comme décrit plus haut, est préférable parce qu'il en résulte une "ouverture" de la coupe à mesure que le sectionnement a lieu sous l'effet de la lame de coupe 34, comme le montre la figure 3. Cette disposition rend plus facile, plus rapide et moins exigeante en énergie l'exécution de la coupe.

L'utilisation de deux arbres distincts 5,9 et d'un organe porteur 3 ayant la configuration d'une chape n'est pas obligatoire; comme moyen équivalent, on peut employer un montage à rotule, comme indiqué schématiquement sur la figure 6; ce moyen permet de monter chaque bloc 10 ou 25 directement sur la face principale 2 du bâti 1, par exemple à l'aide d'une demi-sphère 53 fixée au bâti 1 et d'un coussinet concave 53' correspondant portant le bloc. Sur cette figure 6, les vérins orthogonaux 7 et 23 ne sont pas représentés.

Le détecteur 51 est particulièrement utile quand le tuyau souple qui est déroulé du touret 44 comprend, comme le cas se présente assez fréquemment, des jonctions en matière plastique qui réunissent bout à bout des longueurs successives de tuyau. Ces jonctions sont plus rigides que le caoutchouc; il est plus difficile de les faire tronçonner convenablement par la lame de coupe 34.

L'ensemble de la machine fonctionne, comme décrit plus haut, sous la commande d'un automate programmable comprenant un programme préétabli modifiable. Le détecteur 51 est relié fonctionnellement à cet automate. Quand une jonction est détectée, un signal est transmis par le détecteur 51 à l'automate et le programme de celui-ci vérifie si la coupe que doit exécuter la lame de coupe 34 risque de se trouver dans une jonction et également si une longueur de tuyau comprend une jonction rendant la longueur dévidée inutilisable. Quand une de ces conditions existe réellement, le programme modifie la longueur du tronçon de tuyau à couper en accord avec les longueurs désirées qui ont été mises en mémoire préalablement.

## Revendications

1. Machine automatique pour couper à la longueur désirée un tuyau souple en caoutchouc armé et pour dénuder les extrémités coupées afin de permettre leur raccordement, comprenant,
   - un bâti (1) ayant une face principale (2),
   - un premier bloc (10) et un second bloc (25) ayant chacun un axe géométrique longitudinal (14,14') montés sur ladite face principale (2) du bâti (1) et ayant chacun des moyens de déplacement (12, 26) en sens longitudinal d'un tuyau souple armé et des moyens de maintien (13, 13') de ce même tuyau, ce premier bloc (10) et ce second bloc (25) étant montés déplaçables par rapport au bâti (1) entre, d'une part, une position de déplacement du tuyau souple où lesdits moyens de déplacement (12, 26) et de maintien (13, 13') des deux blocs ont leurs axes géométriques (14, 14') en alignement et définissent ensemble un axe général (30) de déplacement d'un tuyau souple armé, les moyens de maintien (13, 13') qui font partie respectivement des deux blocs étant tournés l'un vers l'autre et séparés par un intervalle déterminé (31) et, d'autre part, une position de dénudage à laquelle les deux blocs (10,25) sont disposés en oblique respectivement sur un côté dudit axe général (30) et sur le côté opposé de ce même axe général,
   - un moyen de tronçonnage (32) ayant une lame de coupe (34) avec cette lame de coupe située dans un plan (P) perpendiculaire audit axe général (30) substantiellement équidistant des deux moyens de maintien (13, 13') quand le premier bloc (10) et le second bloc (25) occupent leur position d'inclinaison,
   - une première et une seconde unité de dénudage (36, 36') ayant chacune une première extrémité équipée d'un outil de dénudage (42, 42') agissant coaxialement à un axe de dénudage (37,37'), ces unités (36,36') étant montées sur le bâti (1) respectivement sur le côté et sur le côté opposé susmentionnés dudit axe général (30), chaque axe géométrique de dénudage (37, 37') étant respectivement en prolongement de l'axe géométrique (14, 14') des moyens d'entraînement et de maintien du bloc (10,25) correspondant quand celui-ci occupe sa position de dénudage,
   - des organes moteurs (7,7',23,23',40,40') tels que des vérins disposés,d'une part,pour provoquer un mouvement de rapprochement relatif des blocs (10,25) et du moyen de tronçonnage (32) afin de tronçonner un tuyau serré dans les moyens de maintien (13,13'), d'autre part pour déplacer les blocs (10,25) entre leur position de déplacement et leur position de dénudage.

2. Machine selon la revendication 1, caractérisée en ce que le moyen de tronçonnage (32) est fixe en position sur le bâti (1) et les blocs (10,25) sont montés déplaçables par rapport à ce moyen de tronçonnage (32) entre leur position de déplacement et une position de tronçonnage à laquelle un tuyau souple serré dans les moyens de maintien (13, 13′) est coupé par la lame de coupe (34).

3. Machine selon la revendication 2,caractérisée en ce que les blocs (10,25) sont montés chacun sur la face principale (2) du bâti (1) avec une possibilité de déplacement dans un premier plan perpendiculaire à ladite face principale (2) pour être déplacés de leur position de déplacement à leur position de tronçonnage, et une possibilité de déplacement dans un second plan parallèle à la face principale (2) du bâti (1) pour être déplacés de leur position de déplacement à leur position de dénudage.

4. Machine selon la revendication 1, caractérisée en ce qu'un organe porteur (3,4) est interposé entre le bâti (1) et chacun des deux blocs (10,25), chaque organe porteur (3,4) étant monté sur la face principale (2) du bâti (1) avec une possibilité de pivotement autour d'un arbre (5) perpendiculaire à ladite face principale (2) pour le déplacement de chacun des deux blocs (10,25) de sa position de déplacement à sa position de dénudage, et chaque organe porteur (3,4) est muni d'un arbre (9) parallèle à cette même face principale (2) autour duquel est monté pivotant le bloc correspondant (10,25) entre ses positions de déplacement et de tronçonnage.

5. Machine selon la revendication 1, caractérisée en ce que le second bloc est équipé, au milieu des moyens de déplacement (26), d'un moyen de marquage(29) servant à inscrire une marque d'identification sur chaque tronçon de tuyau souple coupé et dénudé aux extrémités.

6. Machine selon la revendication 1, caractérisée en ce que le premier bloc (25) comprend des moyens de déplacement (12) ayant des galets supérieurs de serrage réglables en position par rapport à des galets inférieurs moteurs et à un galet inférieur fou (12A′) relié fonctionnellement à un codeur-émetteur d'impulsions électriques et permettant de mesurer les longueurs des tuyaux.

7. Machine selon la revendication 1, caractérisée en ce que chaque unité de dénudage (36, 36′) comprend, le long d'un axe géométrique de dénudage (37,37′) une tête de dénudage (38,38′) plus proche de l'axe général (30) que le reste de ladite unité de dénudage, cette tête étant montée coulissante au moyen de glissières (39,39′), cependant qu'un vérin (40,40′) est articulé d'une part sur le bâti (1), d'autre part sur ladite tête de dénudage (38,38′) pour déplacer celle-ci le long de sa course de dénudage.

8. Machine selon la revendication 7, caractérisée en ce que la tête de dénudage (38,38′) comprend un mandrin (41,41′) entraînable en rotation par un moteur autour de l'axe géométrique de dénudage (37,37′), ce mandrin (41,41′) étant équipé d'un outil rotatif de dénudage (42,42′)réglable en sens radial par rapport audit axe (37,37′) et d'une broche de centrage (43, 43′) située sur cet axe (37,37′).

9. Machine selon la revendication 1 pour la coupe et le dénudage des extrémités coupées d'un tuyau souple enroulé comprenant des jonctions de raccordement, caractérisée en ce que le premier bloc (10) est pourvu d'un détecteur (51) capable de détecter lesdites jonctions et d'émettre un signal correspondant et d'un détecteur (52) contrôlant la présence de tuyau à l'entrée de la machine.

10. Machine selon la revendication 9, caractérisée en ce qu'elle est associée à un automate programmable commandant son fonctionnement, le détecteur (51) étant relié fonctionnellement à cet automate et ce dernier évitant la coupe du tuyau souple par la lame de coupe (34) à travers les jonctions de raccordement ainsi que la coupe d'une longueur comprenant une telle jonction.

**Patentansprüche**

1. Automatische Maschine zum Schneiden eines biegsamen Schlauches aus verstärktem Gummi auf eine gewünschte Länge und zum Bloßlegen der abgeschnittenen Enden, um deren Verbindung zu ermöglichen,
mit einem eine Hauptfläche (2) aufweisenden Gestell (1),
mit einem ersten Block (10) und einem zweiten Block (25), die auf der Hauptfläche (2) des Gestells (1) montiert sind und von denen jeder eine geometrische Längsachse (14, 14′) hat und Mittel (12, 26) aufweist zum Verschieben einer biegsamen, verstärkten Schlauches in Längsrichtung sowie Mittel (13, 13′) zum Halten dieses Schlauches, wobei der erste Block (10) und der zweite Block (26) mit Bezug auf das Gestell (1) verschieblich sind zwischen einerseits einer Verschiebe-Position des biegsamen Schlauches, in der die Verschiebemittel (12, 26) und die Haltemittel (13, 13′) der beiden Blöcke mit ihren geometrischen Achsen (14, 14′) gegenseitig ausgerichtet sind und gemeinsam eine allgemeine Verschiebeachse (30) eines biegsamen, verstärkten Schlauches definieren sowie die Haltemittel (13, 13′), die jeweils einen Teil der beiden Blöcke bilden, aufeinander zugerichtet und durch einen vorbestimmten Zwischenraum (31) voneinander getrennt sind, und andererseits einer Bloßlegungs-Position, in der die beiden Blöcke (10, 25) schräg auf der einen Seite der allgemeinen Achse (30) bzw. auf der gegenüberliegenden Seite derselben allgemeinen Achse angeordnet sind,
mit einem Trennmittel (32), das eine Schneidklinge 34 aufweist, wobei diese Schneidklinge in einer senkrecht zur allgemeinen Achse (30) verlaufenden Ebene im wesentlichen in gleicher Entfernung von den beiden Haltemitteln (13, 13′) angeordnet ist, wenn der erste Block (10) und der zweite Block (25) ihre Neigungsstellung einnehmen,
mit einer ersten und einer zweiten Bloßlegungseinheit (36, 36′), von denen jede ein erstes Ende aufweist, das mit einem Bloßlegungswerkzeug (42, 42′) ausgestattet ist, welches seinerseits koaxial zu einer Bloßlegungsachse (37, 37′) wirkt, wobei diese Einheiten (36, 36′) auf dem Gestell (1) auf der einen Seite bzw. gegenüberliegenden Seite der allgemeinen Achse (30) montiert sind und jede geometrische Bloßlegungsachse (37, 37′) sich jeweils in Verlängerung der geometrischen Achse (14, 14′) der Mitnahme- und Haltemittel des betreffenden Blockes (10, 25) befindet, wenn dieser seine Bloßlegungs-Position einnimmt, und
mit Antriebsorganen (7, 7', 23, 23', 40, 40'), wie z.B. Kolben-Zylinder-Aggregaten, die so angeordnet sind, daß sie einerseits eine relative Annäherungsbewegung der Blöcke (10, 25) und des Trennmittels (32) hervorrufen, um einen in den Haltemitteln (13, 13') eingeklemmten Schlauch durchzutrennen, und andererseits die Blöcke (10, 25) zwischen ihrer Verschiebe-Position und ihrer Bloßlegungs-Position zu verschieben.

2. Maschine nach Anspruch 1, dadurch gekennzeichnet, daß das Trennmittel (32) in ortsfester Position am Gestell (1) angeordnet ist und die Blöcke (10, 25) mit Bezug auf das Trennmittel (32) verschieblich angeordnet sind, und zwar zwischen ihrer Verschiebe-Position und einer Trenn-Position, in welcher ein biegsamer, in den Haltemitteln (13, 13') eingeklemmter Schlauch von der Schneidklinge (34) durchschnitten wird.

3. Maschine nach Anspruch 2, dadurch gekennzeichnet, daß die Blöcke (10, 25) jeweils auf der Hauptfläche (2) des Gestells (1) montiert sind mit einer Verschiebemöglichkeit in einer ersten, senkrecht zur Hauptfläche (2) verlaufenden Ebene, um aus ihrer Verschiebe-Position in ihre Trenn-Position verschoben zu werden, und mit einer Verschiebemöglichkeit in einer zweiten, parallel zur Hauptfläche (2) des Gestells (1) verlaufenden Ebene, um aus ihrer Verschiebe-Position in ihre Bloßlegungs-Position verschoben zu werden.

4. Maschine nach Anspruch 1, dadurch gekennzeichnet, daß ein Trageorgan (3, 4) zwischen dem Gestell (1) und jedem der beiden Blöcke (10, 25) angeordnet ist, wobei jedes Trageorgan (3, 4) auf der Hauptfläche (2) des Gestells (1) angeordnet ist mit einer Schwenkmöglichkeit um eine Achse (5), die senkrecht zur Hauptfläche (2) verläuft, um jeden der beiden Blöcke (10, 25) aus seiner Verschiebe-Position in seine Bloßlegungs-Posiiton zu verschieben, und daß jedes Trageorgan (3, 4) mit einer Achse (9) parallel zur Hauptfläche (2) versehen ist, um welche der betreffende Block (10, 25) zwischen seinen Verschiebe- und Durchtrenn-Positionen schwenkbar angeordnet ist.

5. Maschine nach Anspruch 1, dadurch gekennzeichnet, daß der zweite Block in der Mitte der Verschiebemittel (26) mit einem Markiermittel (29) ausgestattet ist, das dazu dient, auf jedes abgeschnittene und an den Enden bloßgelegte Stück des biegsamen Schlauches eine Identifikationsmarkierung aufzuzeichnen.

6. Maschine nach Anspruch 1, dadurch gekennzeichnet, daß der erste Block (25) Verschiebemittel (12) umfaßt, die obere, in ihrer Position mit Bezug auf untere Antriebsrollen einstellbare Preßrollen aufweisen, und daß eine untere, lose umlaufende Rolle (12A') funktionell mit einem Kodierer verbunden ist, der elektrische Impulse abgibt und die Messung der Länge der Schläuche gestattet.

7. Maschine nach Anspruch 1, dadurch gekennzeichnet, daß jede Bloßlegungseinheit (36, 36') entlang einer geometrischen Bloßlegungsachse (37, 37') einen Bloßlegungskopf (38, 38') aufweist, welcher der allgemeinen Achse (30) näher als der Rest der Bloßlegungseinheit liegt, wobei dieser Kopf mit Hilfe von Gleitführungen (39, 39') verschiebbar angeordnet ist, wobei jedoch ein Kolben-Zylinder-Aggregat (40, 40') einerseits am Gestell (1) und andererseits am Bloßlegungskopf (38, 38') angelenkt ist, um diesen entlang seiner Bloßlegungsbahn zu verschieben.

8. Maschine nach Anspruch 7, dadurch gekennzeichnet, daß der Bloßlegungskopf (38, 38') einen Dorn (41, 41') umfaßt, der durch einen Motor um die geometrische Bloßlegungsachse (37, 37') in Umdrehung versetzbar ist, wobei dieser Dorn (41, 41') mit einem Bloßlegungs-Drehwerkzeug (42, 42') ausgerüstet ist, welches in radialer Richtung mit Bezug auf die Achse (37, 37') einstellbar ist, sowie mit einer Zentrierspindel (43, 43'), die auf dieser Achse (37, 37') liegt.

9. Maschine nach Anspruch 1 zum Schneiden und Bloßlegen der abgeschnittenen Enden eines biegsamen, aufgerollten Schlauches mit Zusammenfügungsverbindungen, dadurch gekennzeichnet, daß der erste Block (10) mit einem Detektor (51) versehen ist, der befähigt ist, die Verbindungen festzustellen und ein entsprechendes Signal abzugeben, und mit einem Detektor (52), der die Anwesenheit des Schlauches am Einlaß der Maschine kontrolliert.

10. Maschine nach Anspruch 9, dadurch gekennzeichnet, daß ihr ein programmierbarer Automat zugeordnet ist, der ihren Betrieb steuert, wobei der Detektor (51) funktionell mit diesem Automaten verbunden ist und letzteter das Schneiden des biegsamen Schlauches durch die Schneidklinge (34) quer durch eine Zusammenfügungsverbindung sowie das Abschneiden einer eine solche Verbindung aufweisenden Schlauchlänge verhindert.

**Claims**

1. An automatic machine for cutting a flexible pipe of reinforced rubber to the desired length and baring the cut ends in order to permit connection thereof, comprising:
   — a support (1) having a main face (2),
   — a first block (10) and a second block (25) which each have a longitudinal geometrical axis (14, 14') and which are mounted on said main face (2) of the support (1) and which each have means (12, 26) for displacement in the longitudinal direction of a reinforced flexible pipe and means (13, 13') for holding said same pipe, said first block (10) and said second block (25) being mounted displaceably with respect to the support (1) between on the one hand a position of displacement of the flexible pipe in which said displacement means (12, 26) and said holding means (13, 13') of the two blocks have their geometrical axes (14, 14') in alignment and together define a general axis (30) of displacement of a reinforced flexible pipe, the holding means (13, 13') which respectively form part of the two blocks being turned towards each other and separated by a given spacing (31) and, on the other hand, a baring position in which the two blocks (10, 25) are disposed inclinedly respectively on one side of said general axis (30) and on the opposite side of said general axis,
- a cutting means (32) having a cutting blade (34) with said cutting blade disposed in a plane (P) perpendicular to said general axis (30) and substantially equidistant from the two holding means (13, 13') when the first block (10) and the second block (25) are in their inclined positions,
- first and second baring units (36, 36') each having a first end fitted with a baring tool (42, 42') acting coaxially with respect to a baring axis (37, 37'), said units (36, 36') being mounted on the support (1) respectively on the above-mentioned side and opposite side of said general axis (30), each geometrical baring axis (37, 37') being disposed respectively in line with the geometrical axis (14, 14') of the entrainment and holding means of the corresponding block (10, 25) when same is in its baring position, and
- drive members (7, 7', 23, 23', 40, 40') such as jacks which are disposed on the one hand to produce relative movement towards each other of the blocks (10, 25) and the cutting means (32) in order to cut a pipe which is clamped in the holding means (13, 13') and on the other hand to displace the blocks (10, 25) between their displacement position and their baring position.

2. A machine according to claim 1 characterised in that the cutting means (32) is fixed in position on the support (1) and the blocks (10, 25) are mounted displaceably with respect to said cutting means (32) between their displacement position and a cutting position in which a flexible pipe clamped in the holding means (13, 13') is cut by the cutting blade (34).

3. A machine according to claim 2 characterised in that the blocks (10, 25) are each mounted on the main face (2) of the support (1) with the possibility of displacement in a first plane perpendicular to said main face (2) to be displaced from their displacement position to their cutting position, and the possiblity of displacement in a second plane parallel to the main face (2) of the support (1), to be displaced from their displacement position to their baring position.

4. A machine according to claim 1 characterised in that a carrier member (3, 4) is interposed between the support (1) and each of the two blocks (10, 25), each carrier member (3, 4) being mounted on the main face (2) of the support (1) with the possibility of pivotal movement about a shaft (5) perpendicular to said main face (2) for displacement of each of the two blocks (10, 25) from its displacement position to its baring position, and each carrier member (3, 4) is provided with a shaft (9) parallel to said main face (2) and about which the corresponding block (10, 25) is mounted pivotably between its displacement and cutting positions.

5. A machine according to claim 1 characterised in that amid the displacement means (26) the second block is provided with a marking means (29) for recording an identification mark on each portion of flexible pipe which has been cut and bared at its ends.

6. A machine according to claim 1 characterised in that the first block (25) comprises displacement means (12) having upper clamping rollers which are adjustable in position with respect to lower drive rollers and a lower idle roller (12A') which is functionally connected to an electrical pulse encoder-emitter, for measuring the lengths of the pipes.

7. A machine according to claim 1 characterised in that each baring unit (36, 36'), along a geometrical baring axis (37, 37'), comprises a baring head (38, 38') which is closer to the general axis (30) than the remainder of said baring unit, said head being mounted slidably by means of sliding guides (39, 39') while a jack (40, 40') is pivotally connected on the one hand to the support (1) and on the other hand to said baring head (38, 38') to displace the baring head along its baring travel.

8. A machine according to claim 7 characterised in that the baring head (38, 38') comprises a chuck (41, 41') which can be driven in rotation by a motor about the geometrical baring axis (37, 37'), said chuck (41, 41') being fitted with a rotary baring tool (42, 42') which is adjustable in a radial direction with respect to said axis (37, 37') and a centering spindle (43, 43') which is disposed on said axis (37, 37').

9. A machine according to claim 1 for cutting and baring the cut ends of a wound flexible pipe comprising connecting junctions characterised in that the first block (10) is provided with a detector (51) capable of detecting said junctions and emitting a corresponding signal and a detector (52) for monitoring the presence of pipe at the entrance of the machine.

10. A machine according to claim 9 characterised in that it is associated with a programmable automatic device for controlling operation thereof, the detector (51) being functionally connected to said automatic device and the automatic device preventing cutting of the flexible pipe by the cutting blade (34) through the connecting junctions and cutting of a length including such a junction.

Fig.1

Fig.2

*Fig.4*

*Fig.3*

*Fig.5*

*Fig.6*